# EUROPÄISCHE PATENTANMELDUNG

(11) **EP 0 849 074 A2**
(43) Veröffentlichungstag der Anmeldung: **24.06.1998**
(21) Anmeldenummer: 97122159.3
(22) Anmeldetag: 16.12.1997
(51) Int. Cl.: B32B 27/32, B65D 65/40, C08L 23/08, C08J 5/18

(54) **Cycloolefincopolymer enthaltende siegelfähige, orientierte Folien**

(30) Priorität: 19.12.1996 DE 19652774; 12.11.1997 DE 19749878
(71) Anmelder: HOECHST AKTIENGESELLSCHAFT, 65929 Frankfurt am Main (DE); MITSUI PETROCHEMICAL INDUSTRIES, LTD., Tokyo (JP)
(72) Erfinder: Beer, Ekkehard,, 65307 Bad Schwalbach (DE); Hatke, Wilfried, Dr., 65719 Hofheim (DE)
(74) Vertreter: Ackermann, Joachim, Dr.

(57) **Zusammenfassung**

Die vorliegende Erfindung betrifft die Verwendung von Cycloolefincopolymeren für die Herstellung von Folien. Für Cyclolefincopolymere wurden Bedingungen gefunden, unter denen biaxial orientierte Folien ohne Siegelschichten fest miteinander verbunden werden können. Dazu wurden Folientemperaturen von 5 °C bis 70 °C oberhalb des Glaspunktes und Zeiten von 0.1 sek. bis 10 sek. gefunden. Schichten aus Cycloolefincopolymer mit einer Dicke ≤ 50 µm werden aufgrund der Erfindung erstmalig als Siegelschichten für Cycloolefincopolymere mit höheren Glasstufen verwendet.

## Beschreibung

Die vorliegende Erfindung betrifft eine ein- oder mehrschichtige orientierte, siegelbare Folie, deren Siegeloberflächen aus amorphen Cycloolefincopolymeren bestehen. Dabei kann die Folienausführung so gestaltet werden, daß die siegelbare Folie eine einschichtige Folie aus dem amorphen Cycloolefincopolymer ist oder die siegelbaren amorphen Cycloolefincopolymere einseitig oder beidseitig als Außenschicht auf eine ein oder mehrschichtige Folie aufgebracht sind.

Es ist bekannt Cycloolefincopolymere im Spritzguß zu verwenden. Eines der wichtigsten und auch ältesten Anwendungsgebiete von Polymerwerkstoffen sind Folien. Die zur Zeit mit Hilfe von Metallocenkatalysatoren entwickelten Polyolefine bieten neue Ansatzpunkte für die weitere Optimierung der Folieneigenschaften und der Folienherstellung.

Aufgabe der vorliegenden Erfindung liegt darin, neue Folien mit verbesserten Siegeleigenschaften bereitzustellen.

Die Aufgabe der vorliegenden Erfindung wird gelöst durch eine Folie, die mindestens eine Schicht aufweist, die mindestens ein Cycloolefincopolymer enthält, ausgewählt aus Polymeren enthaltend 0,1 bis 100 Gew.-%, bevorzugt 0,1 bis 99,9 Gew.-%, bezogen auf die Gesamtmasse des Cycloolefinpolymers, polymerisierte Einheiten mindestens eines cyclischen Olefins der Formeln I, II, II 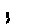 , III, IV, V oder VI 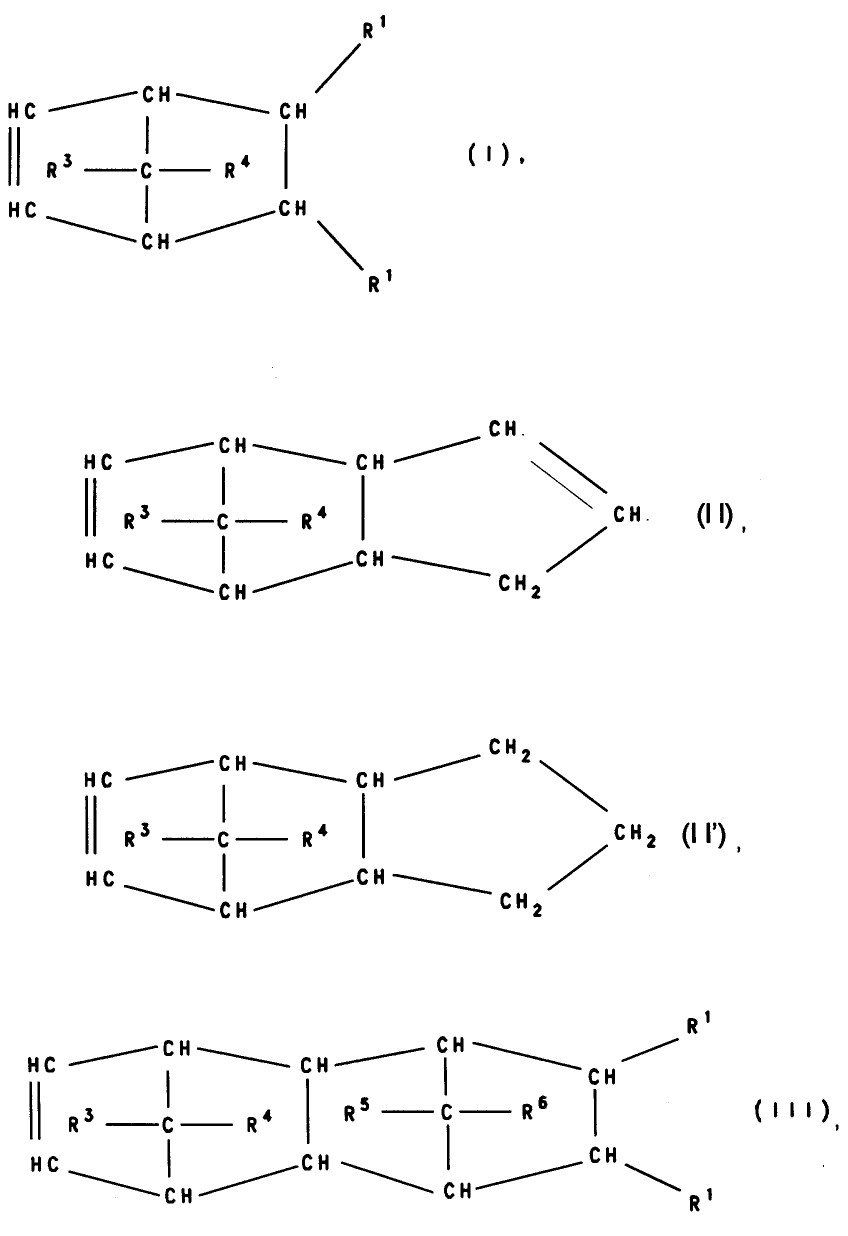 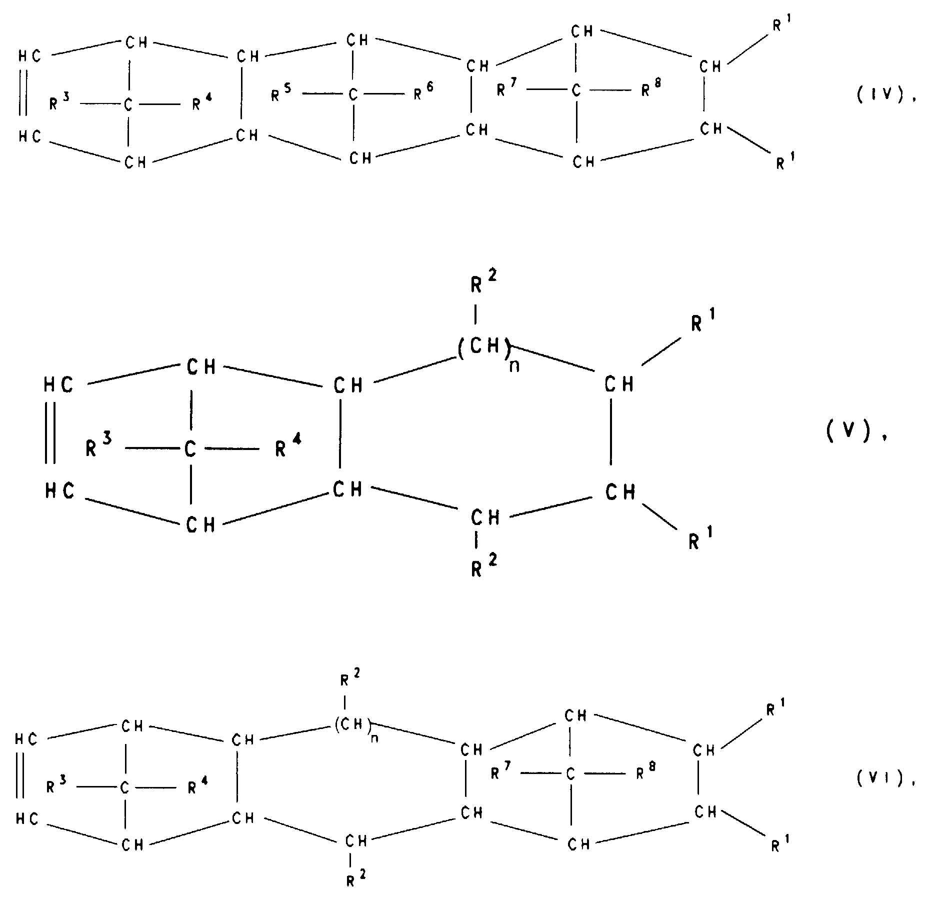 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und 0 bis 99 mol-%, bezogen auf die Gesamtzusammensetzung des Cycloolefincopolymers, polymerisierte Einheiten, welche sich ableiten von einem oder mehreren acyclischen Olefinen der Formel VII 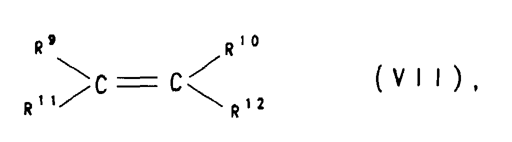 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten, wobei die Folie bei einer Folientemperatur von 5°C bis 70°C oberhalb der Glasübergangstemperatur siegelbar ist.

Eine bevorzugte Folientemperatur liegt bei 5°C bis 30°C oberhalb der Glasübergangstemperatur. Die Zeit für die Siegelung beträgt von 0.1 sek. bis 10 sek, vorzugsweise von 0.1 sek. bis 5 sek.

Die Folie hat vorzugsweise eine äußere Cycloolefincopolymer Schicht. Bei einer äußeren Cycloolefincopolymer Schicht ist für die Versiegelbarkeit der Folie die Glasübergangstemperatur der äußeren Schicht entscheidend.

Die Möglichkeit Folien mit sich selbst zu verkleben (siegeln) ist eine wichtige Voraussetzung für viele Verpackungsanwendungen. In den meisten Fällen geschieht dieser Vorgang unter der Einwirkung von Druck und Temperatur. Um sicheres Siegeln zu gewährleisten, bringt man eine dünne Siegelschicht auf die Folie auf. Das Siegeln von oPP-Folien zum Beispiel ist ohne das Aufbringen von Siegelschichten überhaupt nicht möglich, da die Folie bei den für den Siegelvorgang nötigen Temperaturen zu stark schrumpfen würde.

Für Cycloolefincopolymere konnten überraschend Bedingungen gefunden werden, unter denen biaxial orientierte Folien ohne Siegelschichten fest miteinander verbunden werden. Die Siegelung erfolgt bei einer Folientemperatur, die oberhalb der Glasübergangstemperatur liegt. Um das Schrumpfen der Folie zu verhindern, muß der Vorgang schnell genug durchgeführt werden. Es wurde weiter gefunden, daß sich Cycloolefincopolymere als Rohstoff für Folien, insbesondere für biaxial orientierte Folien an besonders eignen.

Die Cycloolefinpolymere können auch durch ringöffnende Polymerisation mindestens eines der Monomere mit den Formeln I bis VI und anschließender Hydrierung der erhaltenen Produkte erhalten werden.

Außerdem kann das erfindungsgemäße Cycloolefincopolymer 50 bis 99,9 mol-%, bezogen auf die Gesamtzusammensetzung des Cycloolefincopolymers, polymerisierte Einheiten enthalten, welche sich ableiten von einem oder mehreren monocyclischen Olefinen der Formel VIII 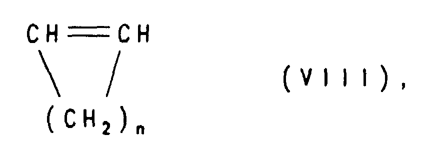 worin n eine Zahl von 2 bis 10 ist.

Der Anteil der polymerisierten Einheiten, die sich ableiten von cyclischen, insbesondere polycyclischen Olefinen beträgt bevorzugt 3 bis 75 mol-% bezogen auf die Gesamtzusammensetzung des Cycloolefincopolymers. Der Anteil der polymerisierten Einheiten, die sich ableiten von acyclischen Olefinen beträgt bevorzugt 5 bis 80 mol% bezogen auf die Gesamtzusammensetzung des Cycloolefincopolymers.

Bevorzugt bestehen die Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthalt (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die erfindungsgemäßen Cycloolefinpolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt NorbornenNinylnorbonen/Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefincopolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefincopolymers.

Das erfindungsgemäße Cycloolefincopolymer enthält vorzugsweise mindestens ein Cycloolefincopolymer, welches polymerisierte Einheiten enthält, die sich ableiten lassen von polycyclischen Olefinen der Formeln I, und polymerisierte Einheiten, die sich ableiten lassen von acyclischen Olefinen der Formel VII.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienyl-zirkondichlorid,
Isopropylen-(9-fluorenyl)-cyclopentadienyl-zirkondichlorid,
rac-Isopropyliden-bis-(1-indenyl)zirkondichlorid
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid, Dimethylsilyl-(cyclopentadienyl)-(1-indenyl)-zirkondichlorid,
Isopropylen-(methylcyclopentadienyl)-(1-indenyl)-zirkondichlorid,
4-(η5-cyclopentadienyl)-4,7,7-trimethyl-(η⁵-4,5,6,7-tetrahydroindenyl-zirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl)]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichlorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid
[2,2,4Trimethyl-4-(η⁵-cyclopentadienyl)-(η⁵-4,5-tetrahydropentalen)]zirkoniumdichlorid
[2,2,4Trimethyl-4-(η⁵-(3,4-Di-isopropyl)cyclopentadienyl)-(η⁵-4,5-tetrahydropentalen)]-zirkoniumdichlorid.

Die erfindungsgemäß verwendeten Cycloolefincopolymer-Folien zeichnen sich durch spezielle mechanische Eigenschaften aus. Die Folien können auf den verwendeten Maschinen verarbeitet werden und besitzen gleichzeitig eine geringe Durchstoßfestigkeit und eine hohe Barriere, vor allem gegen Wasserdampf. Diese Folien, sind in geeigneter Weise orientiert. Dabei kann es sich um Mono- oder Mehrschichtfolien handeln. Die Folien können organische oder anorganische Füllstoffe enthalten, um die Lichtdurchlässigkeit zu verringern oder die Bedruckbarkeit zu verbessern.

Die Herstellung der Cycloolefinpolymere geschieht durch eine heterogene oder homogene Katalyse mit metallorganischen Verbindungen. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von cycloolefincopolymeren beschriebenen Herstellungsverfahren und verwendeten Katalysatorsysteme wird hiermit ausdrücklich bezug genommen.

Cycloolefincopolymere auf der Basis von Comonomeren, wie Ethylen und 2-Norbornen sind amorphe Kunststoffe. Die Erweichungspunkte oder Glasstufen lassen sich durch Variation der Comonomeranteile in einem weiten Temperaturbereich einstellen. Cycloolefincopolymer weist Wärmeformbeständigkeiten (HDT-B) im Bereich von 75 °C bis 170 °C auf. Die gute Fließfähigkeit der Polymerschmelzen erlaubt die Anwendung der verschiedenen Verfahren zur Herstellung von Folien aus Cycloolefincopolymer.

Nach dem Verstrecken besitzen die Cycloolefincopolymer-Folien ein zähduktiles Eigenschaftsprofil. Die Reißdehnung und die Durchstoßfestigkeit der Folien sind signifikant erhöht. Demgegenüber sind die Elastizitätsmoduln und die Reißfestigkeit der Folien nur um den Faktor 2 bis 3 erhöht. Ausgehend von einem relativ hohen Niveau der Elastizitätsmoduln für die unverstreckten Folien werden jedoch Elastizitätsmoduln von 3,5 GPa bis 4,3 GPa und Reißfestigkeiten von bis zu 160 MPa erreicht. Die Werte von hochverstreckten teilkristallinen Materialien wie Polyethylenterephthalat (bis zu 6 GPa) werden aufgrund des amorphen Charakters von Cycloolefincopolymer jedoch nicht erreicht. Cycloolefincopolymer-Folien weisen geringe Unterschiede der Moduli und Festigkeiten zwischen verstreckten und unverstreckten Folien auf im Vergleich zu biaxial orientierten Polypropylenfolien. Sie erlauben dadurch die Herstellung von Folien mit relativ isotropen mechanischen Eigenschaften. Vor allem der hohe Modulus in Längsrichtung ist für eine geringe Dehnung der Folie durch Zugbelastungen bei der Weiterverarbeitung interessant.

Die Cycloolefincopolymer-Folien werden aufgrund der Siegelbarkeit als Verpackungsmaterial verwendet.

Die Erfindung wird anhand von Abbildungen näher erläutert.

### Abbildungen

- Abb. 1:: Schrumpfverhalten von biaxial orientierten Cycloolefincopolymer-Folien
- Abb. 2:: Siegelverhalten von biaxial orientierten Cycloolefincopolymer-Folien

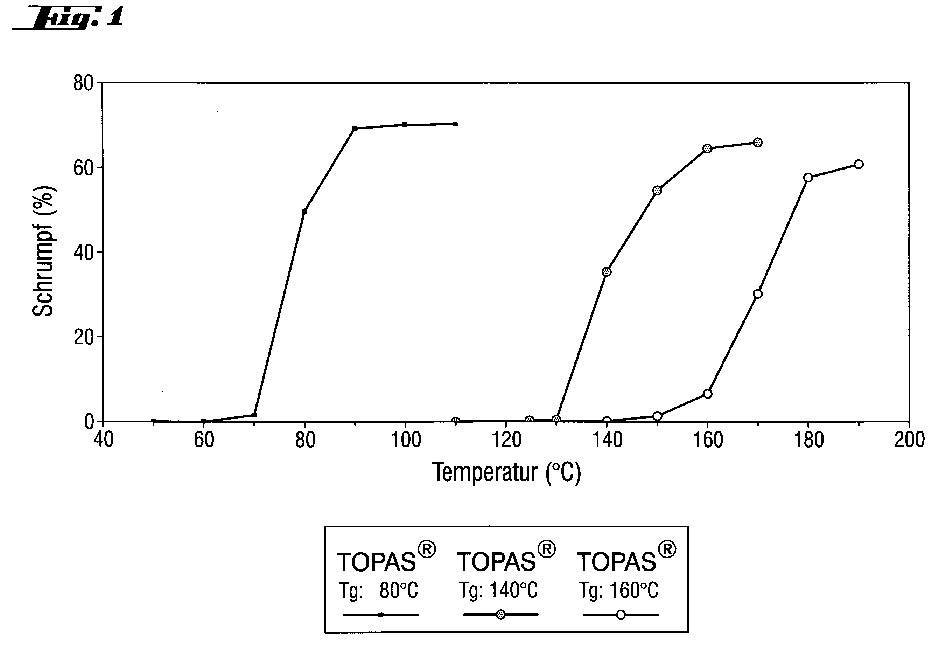

In Abb. 1 wird das Schrumpfverhalten von drei Proben einer biaxial orientierten Folie enthaltend Norbornen-Ethylen-Copolymer (Topas®) dargestellt. Die Messungen wurden an der Luft, 15 Minuten bei einem Streckverhältnis 1:3 * 1:3 durchgeführt. Die drei Proben wiesen die folgenden Glasübergangstemperaturen auf:

| **Proben** | 1 | 2 | 3 |
|---|---|---|---|
| **Glasübergangstemperatur T**_{**g**} **[° C]** | 80 | 140 | 160 |

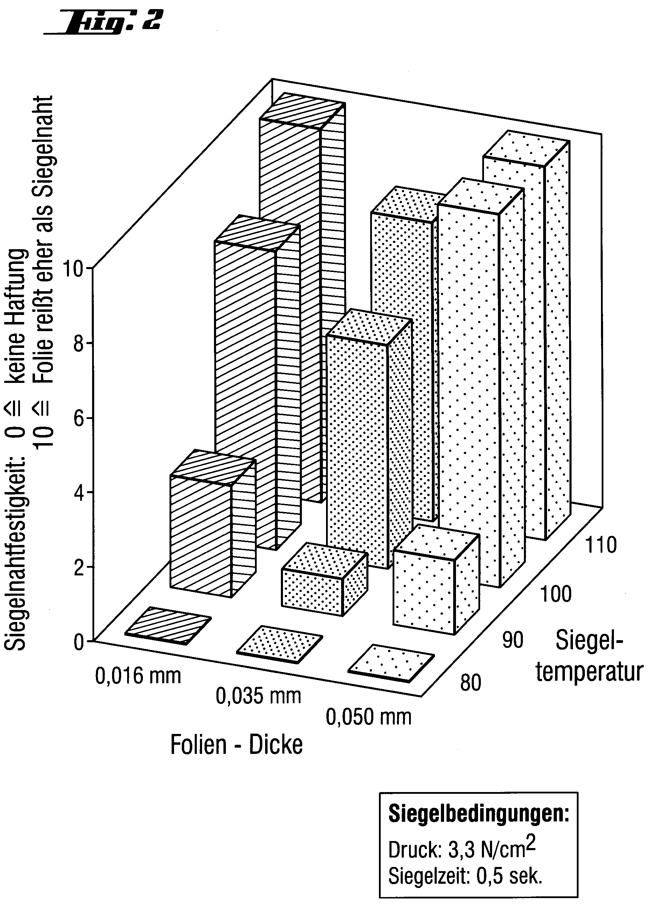

In Abb. 2 werden die Meßergebnisse der Siegelnahtfestigkeit dargestellt. Dazu wurden drei Proben einer biaxial orientierten Folie enthaltend Norbornen-Ethylen-Copolymer (Topas®) mit einer Glasübergangstemperatur T_{g} von 80 °C vermessen. Die drei Proben wiesen die folgende Foliendicken auf:

| **Proben** | 1 | 2 | 3 |
|---|---|---|---|
| **Foliendicke [mm]** | 0,016 | 0,035 | 0,050 |

## Patentansprüche

1. Siegelfähige ein- oder mehrschichtige Folie enthaltend mindestens ein Cycloolefincopolymer ausgewählt aus Polymeren enthaltend 0,1 bis 100 Gew.-%, bevorzugt 0,1 bis 99,9 Gew.-%, bezogen auf die Gesamtmasse des Cycloolefinpolymers, polymerisierte Einheiten mindestens eines cyclischen Olefins der Formeln I, II, II 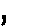 , III, IV, V oder VI 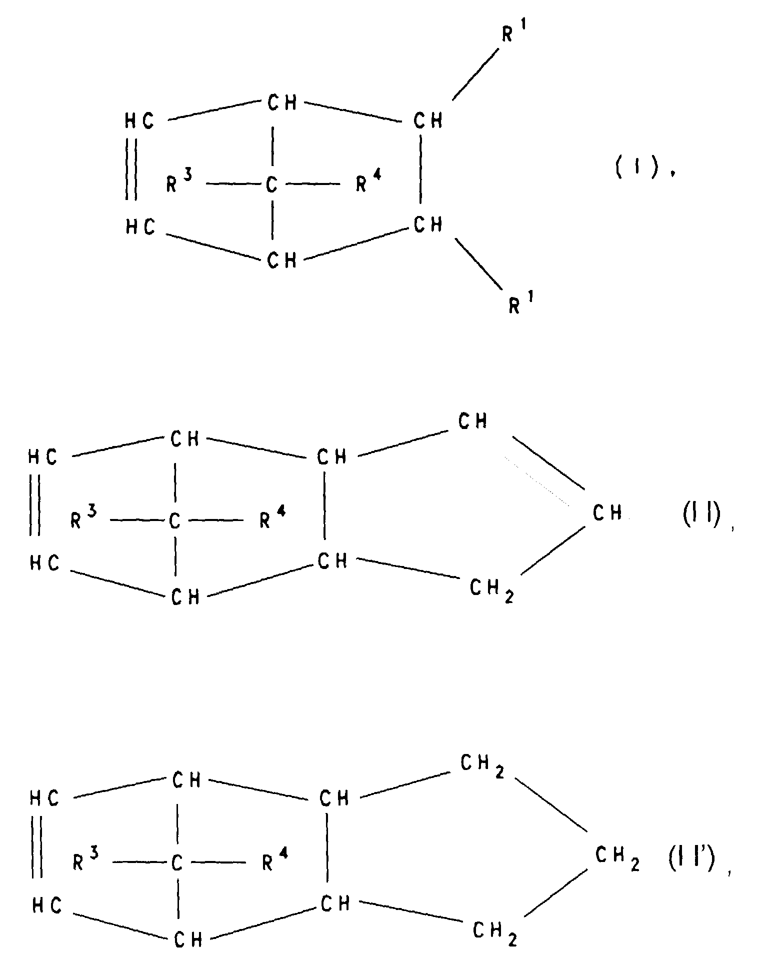 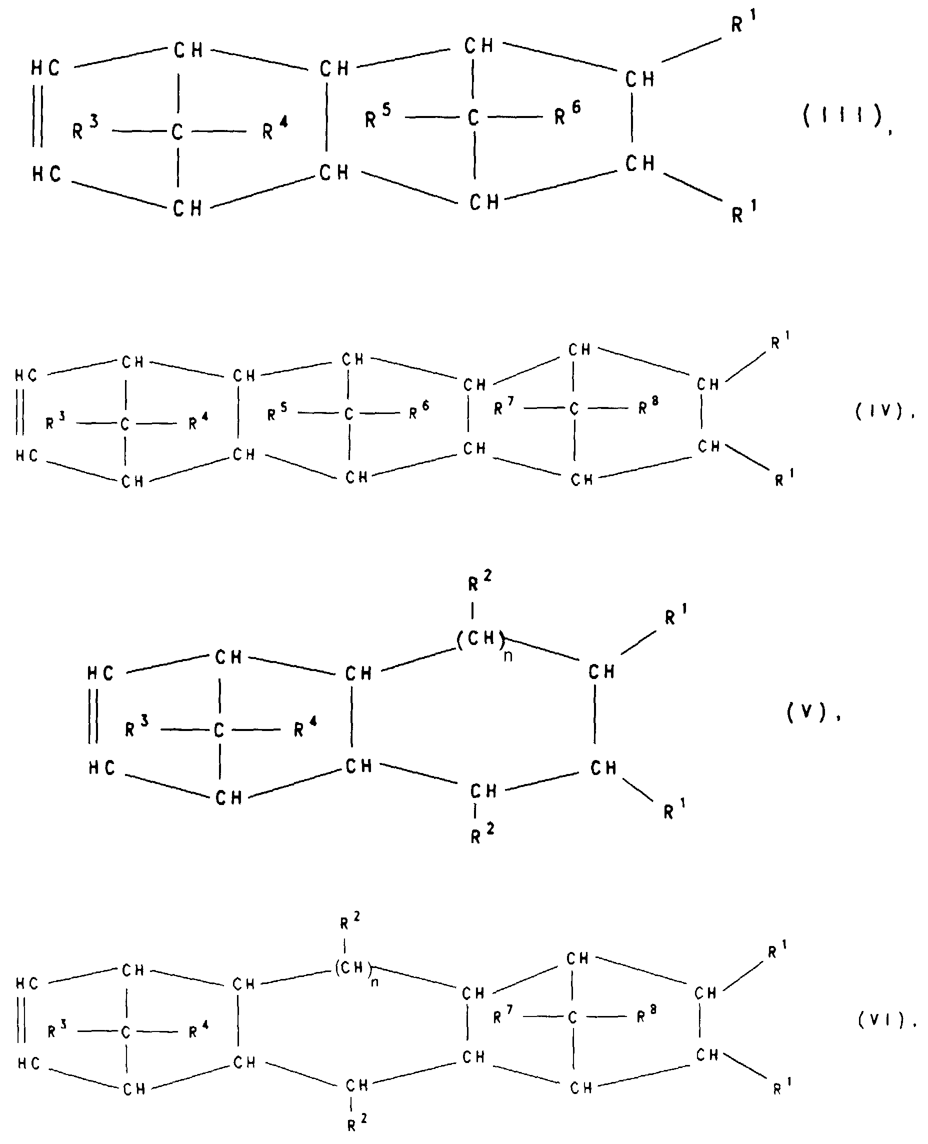 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und 0 bis 99,9 mol-%, bezogen auf die Gesamtzusammensetzung des Cycloolefincopolymers, polymerisierte Einheiten, welche sich ableiten von einem oder mehreren acyclischen Olefinen der Formel VII 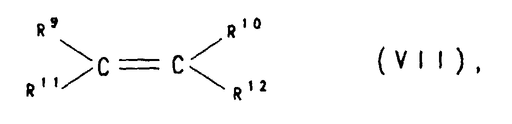 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten, wobei die Folie bei einer Folientemperatur von 5 °C bis 70 °C oberhalb der Glasübergangstemperatur versiegelbar ist.

2. Folie nach Anspruch 1, die bei einer Folientemperatur von 5 °C bis 30 °C oberhalb der Glasübergangstemperatur versiegelbar ist.

3. Folie nach Anspruch 1 oder 2, wobei die Zeit für die Versiegelung von 0.1 sek. bis 10 sek, vorzugsweise von 0.1 sek. bis 5 sek beträgt.

4. Folie nach einem oder mehreren der Ansprüche 1 bis 3, wobei die Folie bei einer relativen Feuchte von 85% und einer Temperatur von 23°C eine Wasserdampfpermeation von ≤ 0,05 g/m²d, eine Durchstoßfestigkeiten von ≤ 20 N und eine Dicke von ≤ 100 µm aufweist.

5. Folie nach einem oder mehren der Ansprüche 1 bis 4, wobei das Cycloolefincopolymer 0,1 bis 99,9 mol-%, bezogen auf die Gesamtzusammensetzung des Cycloolefincopolymers, polymerisierte Einheiten enthält, welche sich ableiten von einem oder mehreren monocyclischen Olefinen der Formel VIII 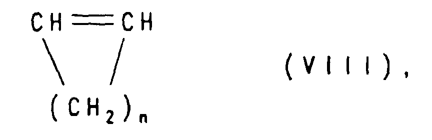 worin n eine Zahl von 2 bis 10 ist.

6. Verfahren zur Herstellung einer mono- oder biaxial verstreckten Folie nach einem oder mehreren der Ansprüche 1 bis 5, wobei Cycloolefincopolymer durch eine heterogene oder homogene Katalyse mit metallorganischen Verbindungen hergestellt wird, Cycloolefincopolymer zur Folie extrudiert wird und die Folie mono- oder biaxial verstreckt wird.

7. Verfahren zur Herstellung einer mono- oder biaxial verstreckten Folie nach Anspruch 6, wobei die Folie mindestens eine äußere Schicht aus einem Cycloolefincopolymer enthält und die Folie bei einer Folientemperatur von 5 °C bis 70°C, vorzugsweise 5 ° C bis 30 ° C oberhalb der Glasübergangstemperatur der äußeren Schicht versiegelbar ist.

8. Verwendung einer Folie nach einem oder mehreren der Ansprüche 1 bis 5 als Verpackungsmaterial.
